# EUROPEAN PATENT APPLICATION

(11) **EP 4 660 014 A1**
(43) Date of publication of application: **10.12.2025**
(21) Application number: 23918907.9
(22) Date of filing: 31.01.2023
(51) Int. Cl.: B60R 1/12, B60R 1/26

(54) **VEHICULAR IMAGING DEVICE**

(71) Applicant: Nissan Motor Co., Ltd., Kanagawa 221-0023 (JP)
(72) Inventor: WATANABE, Takeshi, Atsugi-shi, Kanagawa 243-0123 (JP); SUZUKI, Yasuhiro, Atsugi-shi, Kanagawa 243-0123 (JP); MUSHA, Yusuke, Atsugi-shi, Kanagawa 243-0123 (JP)
(74) Representative: Grünecker Patent- und Rechtsanwälte PartG mbB
(86) International application number: PCT/JP2023/003090
(87) International publication number: WO 2024/161514

(57) **Abstract**

According to the present invention, a vehicular imaging device (10) is provided, comprising: an infrared light emitter (20) installed in an exterior component of a vehicle (1), the infrared light emitter (20) emitting infrared light to periphery of the vehicle (1); a camera (30) installed in the exterior component at a position spaced outward from the infrared light emitter (20) in a vehicle width direction of the vehicle (1), the camera (30) capturing an imaging range including a range into which the infrared light is emitted; and a light blocking wall (40) disposed between the infrared light emitter (20) and the vehicle (1), the first light blocking wall (40) blocking a portion of the infrared light from the infrared light emitter (20).

## Description

### Technical Field

The present invention relates to a vehicular imaging device.

### Background Art

A night vision device for vehicles that is incorporated in a head lamp unit of a vehicle is known, which includes: an infrared projector for projecting infrared rays; an infrared camera arranged close to the infrared projector and imaging an object radiated by the infrared rays; and an infrared ray transmitting filter arranged facing the cover included in the head lamp unit and transmitting only the infrared rays, wherein the infrared projector and the infrared camera are arranged in such a manner that an irradiation range of the infrared projector and an imaging range of the infrared camera do not overlap in the cover included in the head lamp unit (Patent Document 1).

### Prior Art Documents

### Patent Documents

Patent Document 1: JP2015-43279A

### Summary of Invention

### Problems to be solved by Invention

In the above conventional technique, when using an infrared light camera including a lens with a wide angle of view, such as a fisheye lens, there is a problem in that the light reflected from a physical object disposed around the camera's periphery appears in the image, resulting in the occurrence of an area within the infrared light camera's imaging range where a target object cannot be detected.

A problem to be solved by the present invention is to provide a vehicular imaging device that can suppress the occurrence of an area within the camera's imaging range where a target object cannot be detected due to the appearance in image of those hindering the detection of the target object.

### Means for solving problems

The present invention solves the above problem by disposing a light blocking wall between a vehicle and an infrared light emitter that emits infrared light to the periphery of the vehicle, the light blocking wall blocking a portion of the infrared light from the infrared light emitter.

### Effect of Invention

According to the present invention, it is possible to suppress the occurrence of an area within the camera's imaging range where a target object cannot be detected due to the appearance in image of those hindering the detection of the target object.

### Brief Description of Drawings

FIG. 1 is a perspective view illustrating an example of a side mirror equipped with the vehicular imaging device according to an embodiment of the present invention.
FIG. 2A is a front view of the side mirror of FIG. 1.
FIG. 2B is a perspective view of the side mirror of FIG. 2A as seen from the direction of arrow X.
FIG. 2C is an enlarged bottom view of a main portion of the side mirror of FIG. 2A.
FIG. 3 is a vertical cross-sectional view illustrating an example of the arrangement of an infrared light emitter and a camera of FIG. 2A.
FIG. 4 is a plan view illustrating an example of the light emission range of FIG. 3.
FIG. 5 is a diagram illustrating an example of an image captured by the camera when the side mirror of FIG. 1 is in an unfolded state.
FIG. 6 is a diagram illustrating an example of an image captured by the camera when the side mirror of FIG. 1 is in a folded state.

### Mode(s) for Carrying out the Invention

Hereinafter, one or more embodiments of the present invention will be described with reference to the drawings.

The vehicular imaging device according to an embodiment of the present invention can be used, for example, when parking a vehicle by autonomous travel control or by manual operation of a driver. As an example, the vehicular imaging device of the present embodiment is used for parking control that stores parking positions when a vehicle was parked in past times and parks the vehicle at a stored parking position by autonomous traveling. Specifically, an image of the periphery of the parking position is captured using a camera equipped with a lens having a wide angle of view (e.g., 150° to 180°), such as a fisheye lens, and the parking position is stored in a state of being association with the image data. This allows the parking position to be recognized and stored even if there is no boundary line (e.g., a white line) indicating the parking space. Then, when the vehicle travels again around the stored parking position (e.g., within a range of 100 m from the parking position), a travel route to the parking position is set and each device of the vehicle is controlled to travel along the travel route. These control operations are executed by a control device (not illustrated).

When the periphery of the vehicle is bright, such as during the day, physical objects in the periphery of the vehicle can be detected without any problems from the captured image, but when the periphery of the vehicle is dark, such as at night, the captured image may be completely black (the average brightness of the image approaches 0), making it impossible to detect physical objects from the contrast of the image. In this case, by installing a light emitter near the camera, it is possible to capture an image with a contrast that allows physical objects to be detected. Unfortunately, however, when using a camera including a lens with a wide angle of view, such as a fisheye lens, light reflected from the side surface of the vehicle body, etc., is likely to appear in the image, and ghosts caused by the reflected light will affect the detection of physical objects. In this context, in the vehicular imaging device of the present embodiment, a light blocking wall that blocks a portion of the light from the light emitter is disposed between the vehicle and the light emitter that emits light to the periphery of the vehicle.

### <Structure of Vehicular Imaging Device>

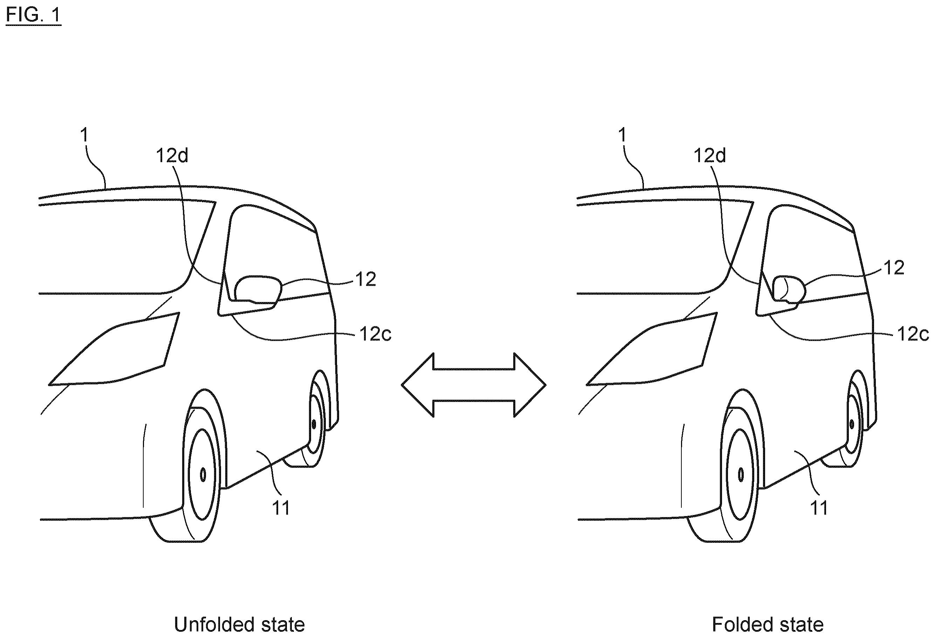

FIG. 1 is a diagram illustrating an example of a side mirror equipped with the vehicular imaging device according to an embodiment of the present invention, and is a perspective view of a vehicle 1 as seen from the left front. The vehicular imaging device of the present embodiment is installed in an exterior component attached to the exterior of the vehicle, and the side mirror illustrated in FIG. 1 is an example of the exterior component. In addition to the side mirror, examples of exterior components include bumpers, fenders, roofs, and wings. The side mirror refers to a rear-view mirror installed outside the passenger compartment of the vehicle 1, and its specific examples include a side mirror attached to a front door of the vehicle 1 (also referred to as a door mirror, hereinafter) and a side mirror attached to a fender of the vehicle 1 (also referred to as a fender mirror, hereinafter). In the vehicle 1 illustrated in FIG. 1, a side mirror 12 is attached to a front door 11 on the left side.

The side mirror 12 attached to the front door 11 is, for example, in an unfolded state illustrated on the left side of FIG. 1 when the vehicle 1 is traveling, and in a folded state illustrated on the right side of FIG. 1 when the vehicle 1 is parked. The unfolded state refers to a state in which the mirror surface of the side mirror 12 is perpendicular to the side surface of the vehicle body of the vehicle 1 and faces the rear of the vehicle 1. In contrast, the folded state refers to a state in which the side mirror 12 is folded so that the protruding length of the side mirror 12 in the vehicle width direction is shorter than that in the unfolded state, and is, for example, a state in which the mirror surface of the side mirror 12 is parallel to the side surface of the vehicle body of the vehicle 1 and faces the side surface of the vehicle body of the vehicle 1. The two states illustrated in FIG. 1 can be switched by operating a switch or the like provided at the driver's seat of the vehicle 1. The side mirror 12 may not be in a folded state and may always be in an unfolded state. For example, a fender mirror is not in the folded state and is always in the unfolded state.

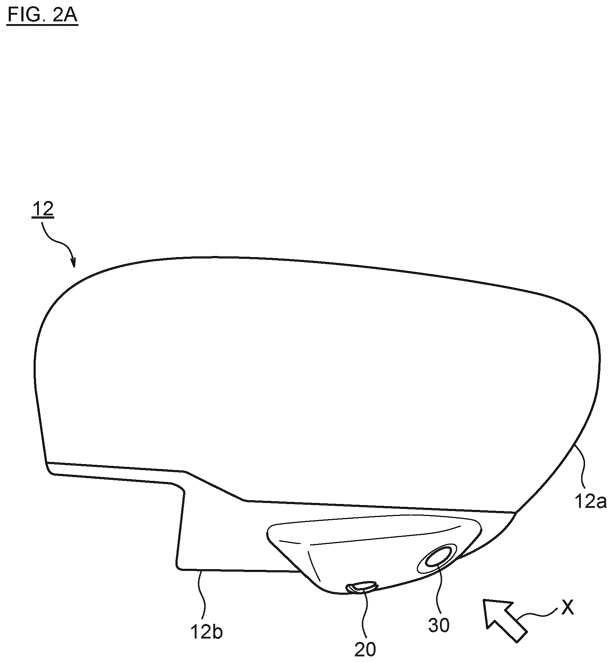

FIG. 2A is a front view of the side mirror 12 illustrated in FIG. 1. As illustrated in FIG. 2A, the side mirror 12 includes housings 12a and 12b. The housing 12a is a housing that supports a mirror surface for the drive to ensure the rear visibility during the driving, and is attached to the housing 12b. The mirror surface of the side mirror is made of glass, for example, and a thin film is formed on the surface by sputtering. On the other hand, the housing 12b supports the housing 12a and is attached to a base 12d of the front door 11 via an arm 12c illustrated in FIG. 1. The side mirror 12 does not necessarily have to be attached to the front door 11, and may be attached to the end portion of the side roof, for example, or may otherwise be housed in a pot provided at the center of the roof.

The housings 12a and 12b, the arm 12c, and the base 12d are made, for example, of synthetic resin, and may be in any suitable shape within a range that allows the driver to properly recognize the traffic situation behind the vehicle 1. In addition, the housings 12a and 12b may be configured to be rotatable about rotation axes in the front-rear direction and width direction of the vehicle 1 in addition to the rotation axis in the height direction of the vehicle 1 so that the driver can ensure a rearward field of vision in accordance with the driver's line of sight. In this case, the housings 12a and 12b may be rotated manually by an occupant of the vehicle 1, or may also be rotated by a motor (not illustrated) housed in the housing 12b. The housings 12a and 12b may be molded as a single body.

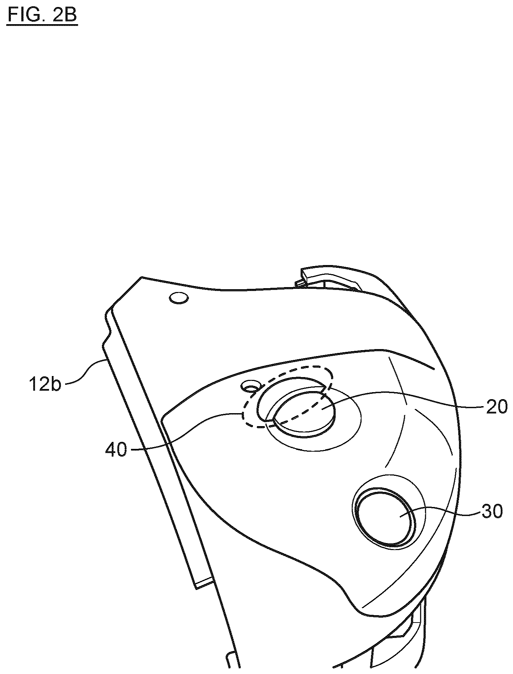

The vehicular imaging device of the present embodiment includes an infrared light emitter, a camera, and a light blocking wall that suppresses reflection of infrared light, in order to reliably recognize physical objects in the periphery of the vehicle 1 even when the periphery is dark. As illustrated in FIG. 2A, infrared light emitter 20 and camera 30 are housed in the housing 12b. To describe the positional relationship of these configurations, FIG. 2B is used which is a perspective view of the side mirror 12 illustrated in FIG. 2A as seen from the direction of arrow X. FIG. 2B only illustrates the housing 12b, infrared light emitter 20, and camera 30 of the configurations illustrated in FIG. 2A.

The infrared light emitter 20 is a light emitter that emits infrared light to the periphery of the vehicle 1 and includes, for example, a light source that emits infrared light and an output port from which the infrared light rays are output. Examples of the light source include an LED light source and a laser light source, and the wavelength of the output infrared light is, for example, 700 to 1000 nm. The light emission range within which the infrared light emitter 20 emits the infrared light depends on the type of light source and the shape and direction of the output port. For example, as illustrated in FIGS. 2A and 2B, when the output port is directed toward the ground on which the vehicle 1 stands, the light emission range is within a range of 4 to 8 m from the infrared light emitter 20 as seen in a plan view.

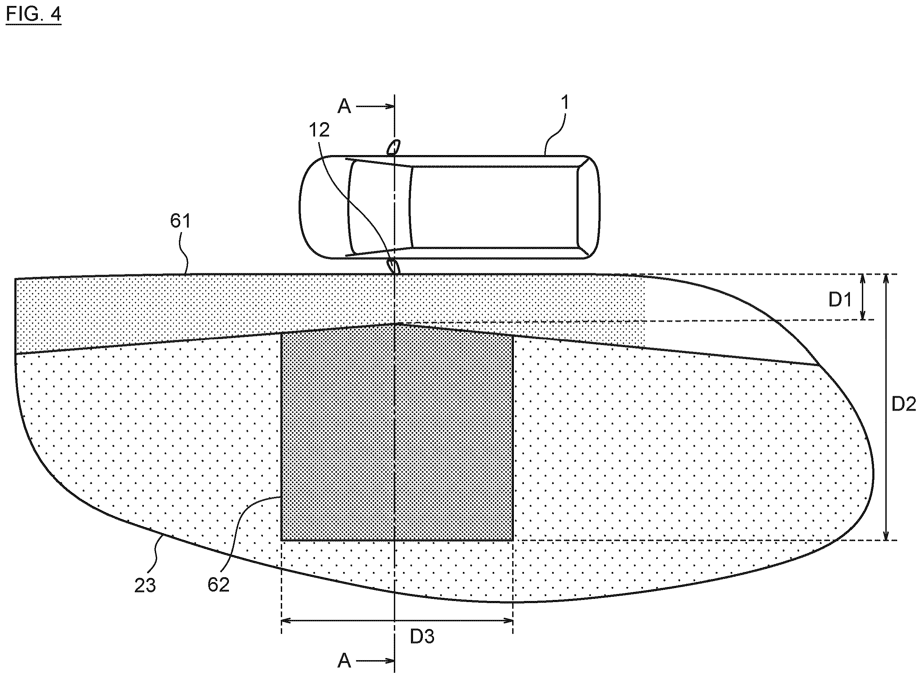

The infrared light emitter 20 is installed so as to be able to emit the infrared light on the right or left side of the vehicle 1 within at least a range of 4 m from the vehicle 1 on the ground on which the vehicle 1 stands. For example, when the infrared light is emitted from the infrared light emitter 20 illustrated in FIGS. 2A and 2B, the light emission range is a range 23 illustrated in FIG. 4. Details of the light emission range 23 will be described later.

Referring again to FIG. 2B, the camera 30 is a camera that captures an imaging range including at least a part of the range into which the infrared light is emitted. The range into which the infrared light is emitted refers to a range into which the infrared light emitter 20 emits infrared light, and corresponds to the light emission range of the infrared light emitter 20. The imaging range refers to a range in which the camera 30 can image a target object, and the size of this range (i.e., the angle of view) depends on the lens of the camera 30, etc. The target object is an object that is imaged by the camera 30, and is, for example, a physical object that can be used to recognize the parking position of the vehicle 1. Specifically, examples of target objects include boundary lines, center lines, road markings, guard rails, curbstones, road side walls, road signs, traffic lights, and crosswalks. The target objects also include the vehicle **1,** other vehicles than the vehicle 1, motorcycles (motorbikes), and bicycles. The target objects further include buildings and roadside installations (e.g., mailboxes, vending machines, and the like) in the periphery of the vehicle 1. The camera 30 is installed at a position at which it can image these target objects.

As the camera 30, for example, a known quantum or uncooled infrared light camera can be used. A camera with an adjustable filter that can image both visible light and infrared light may also be used. For example, a camera capable of capturing visible light and near infrared light of predetermined wavelengths is used. The predetermined wavelengths are those including the peak wavelength of the spectrum of the near infrared light output from the infrared light emitter 20, for example, 930 to 950 nm. In the present embodiment, near infrared light is defined as electromagnetic waves having wavelengths in a range of 700 to 2500 nm.

The camera 30 is installed in an exterior component at a position spaced outward from the infrared light emitter 20 in the vehicle width direction of the vehicle 1. Being spaced outward in the vehicle width direction refers to a direction away from the center of the vehicle 1 in the vehicle width direction. For example, in FIG. 2B, the upper side of the drawing is the side closer to the vehicle body of the vehicle 1, and the lower side of the drawing is the side farther from the vehicle body of the vehicle 1, thus the camera 30 illustrated in FIG. 2B is installed lower than the infrared light emitter 20 illustrated in FIG. 2B. That is, the camera 30 illustrated in FIG. 2B is installed at a position farther from the vehicle body of the vehicle 1 than the infrared light emitter 20 illustrated in FIG. 2B. In other words, the infrared light emitter 20 is installed at a position closer to the vehicle 1 than the camera 30.

A light blocking wall (also referred to as a first light blocking wall, hereinafter) for suppressing reflection of infrared light is disposed between the infrared light emitter 20 and the vehicle 1 and blocks a portion of the infrared light output from the infrared light emitter 20. The shape of the first light blocking wall can be any appropriate shape within a range in which a portion of the infrared light output from the infrared light emitter 20 can be blocked. The first light blocking wall may be a portion of the housing 12a, 12b of the side mirror 12. As an example, in the housing 12b illustrated in FIG. 2B, the part surrounded by a dashed line corresponds to first light blocking wall 40.

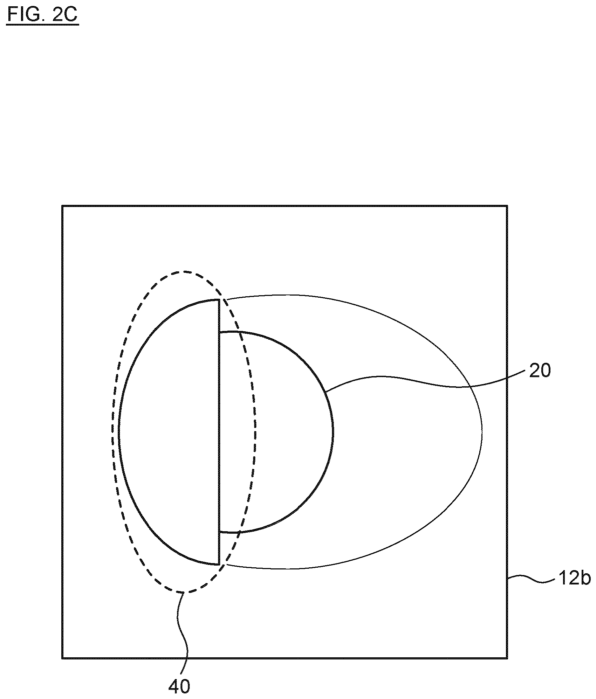

The positional relationship between the infrared light emitter 20 and the first light blocking wall 40 will be described with reference to FIG. 2C. FIG. 2C is an enlarged bottom view of the main portion of the side mirror 12 illustrated in FIG. 2A, in which the infrared light emitter 20 portion is enlarged. The first light blocking wall 40 illustrated in FIG. 2C is shaped to cover approximately 1/3 of the side of an output port of the infrared light emitter 20 that is closer to the vehicle 1 (i.e., the left side of the drawing). Which portion of the infrared light output from the infrared light emitter 20 is blocked by the first light blocking wall 40 depends on the vehicle body shape of the vehicle 1, the installation positions of the infrared light emitter 20 and camera 30, etc.

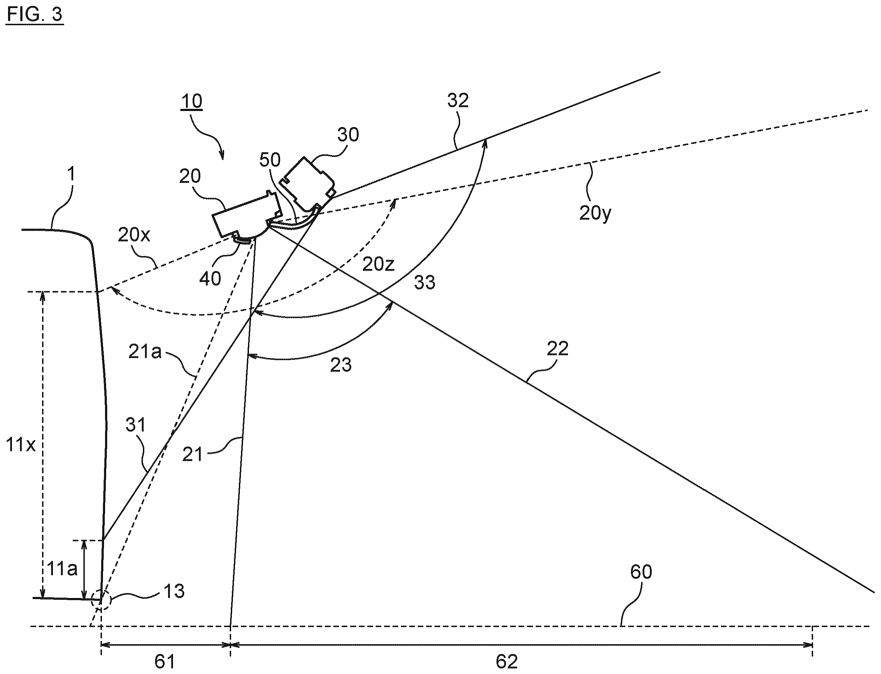

As an example, when the side mirror 12 is in an unfolded state, the first light blocking wall 40 blocks infrared light from the infrared light emitter 20 that is emitted to a portion of the side surface of the vehicle 1 that is included in the imaging range of the camera 30. The range in which the first light blocking wall 40 blocks the infrared light from the infrared light emitter 20 will be specifically described below with reference to FIG. 3.

FIG. 3 is a vertical cross-sectional view illustrating an example of the arrangement of the infrared light emitter 20 and camera 30 in FIG. 2A, and specifically, is a cross-sectional view of the main portion when a cross section A-A illustrated in FIG. 4, which is a plan view, is seen from the front. The vehicle 1 on the left side of FIG. 3 represents a cross-section of the left side surface of the vehicle body, and it is assumed that the side mirror 12 of the vehicle 1 is in an unfolded state. As illustrated in FIG. 3, the infrared light emitter 20, camera 30, and first light blocking wall 40 that constitute the vehicular imaging device 10 are arranged on the left side of the vehicle 1 (the right side in FIG. 3). In addition, a second light blocking wall 50, which will be described later, is disposed between the infrared light emitter 20 and the camera 30. For descriptive purposes, other configurations such as the housing 12b are not illustrated.

The camera 30 illustrated in FIG. 3 includes a fisheye lens, and its imaging range is a range 33 defined by boundaries 31 and 32. As illustrated in FIG. 3, a portion 11a illustrated in FIG. 3 of the side surface of the vehicle 1 (specifically, the front door 11) is included in the imaging range 33 because the angle of view of the camera 30 is wide. On the other hand, if the first light blocking wall 40 and the second light blocking wall 50 are not present, the light emission range of the infrared light emitter 20 is a range 20z defined by boundaries 20x and 20y, and in this case, a portion 11x illustrated in FIG. 3 of the side surface of the vehicle 1 (specifically the front door 11) is included in the light emission range 20z.

The first light blocking wall 40 blocks the infrared light output from the infrared light emitter 20 so that the portion 11a is not included in the portion 11x (i.e., so that the portion 11a is outside the light emission range 20z). For example, the first light blocking wall 40 is disposed so that, of the boundaries defining the light emission range of the infrared light emitter 20, the boundary on the left side of the drawing narrows to a boundary 21a that passes through a left-side lower end 13 of the vehicle body of the vehicle 1. As another example, as illustrated in FIG. 3, the first light blocking wall 40 is disposed so that the infrared light is not emitted to a first range 61 of ground 60 on which the vehicle 1 stands. The first range 61 a first distance (e.g., 0.3 to 0.6 m) from the left-side lower end 13 of the vehicle body of the vehicle 1. The first light blocking wall 40 may also be disposed so that at least a part of the portion 11a is outside the light emission range 20z. For example, the first light blocking wall 40 blocks the infrared light output from the infrared light emitter 20 so that a part of the portion 11a is outside the portion 11x. This can suppress the appearance of infrared light reflected by the portion 11a in the image captured by the camera 30.

The vehicular imaging device 10 may also include a second light blocking wall 50 different from the first light blocking wall 40. The second light blocking wall 50 blocks a portion of the infrared light output from the infrared light emitter 20. As illustrated in FIG. 3, the second light blocking wall 50 is disposed between the infrared light emitter 20 and the camera 30 so that the infrared light from the infrared light emitter 20 is not emitted to the camera 30. In other words, if the second light blocking wall 50 is not present, the light emission range of the infrared light emitter 20 will extend to the boundary 20y on the right side of the drawing, and there will be a risk of the light being directly emitted to the camera 30; however, by disposing the second light blocking wall 50 illustrated in FIG. 3, the boundary on the right side of the drawing of the boundaries defining the light emission range of the infrared light emitter 20 narrows to the boundary 22, and the infrared light from the infrared light emitter 20 is no longer emitted to the camera 30.

In the vehicular imaging device 10, in order to detect target objects present on the road and the like and to properly recognize the parking position of the vehicle 1 from the image data, it is necessary to image target objects within a certain range. This certain range is, for example, a range from a position that is a first distance away from the left-side lower end 13 of the vehicle body of the vehicle 1 to a second distance from the left-side lower end 13. This range is illustrated in FIG. 3 as a second range 62. The second distance is about half the width of the road (e.g., 6 m), for example, 3.5 to 4.5 m. When the second light blocking wall 50 is disposed, the position and shape of the second light blocking wall 50 are set so that the infrared light is emitted to the second range 62. The second distance is set to be longer than the first distance.

FIG. 4 is a plan view illustrating an example of the positional relationship of the light emission range 23, first range 61, and second range 62 of FIG. 3. Infrared light is emitted from the infrared light emitter 20 housed in the housing 12b of the side mirror 12 to the light emission range 23 illustrated with the lightest hatching. In contrast, infrared light is not emitted from the infrared light emitter 20 to the first range 61 illustrated with the second lightest hatching because the infrared light is blocked by the first light blocking wall 40 illustrated in FIG. 3. The above-described first distance D1 corresponds to the distance from the side mirror 12 to the second range 62 as illustrated in FIG. 4. The second range 62 illustrated with the darkest hatching is located within the light emission range 23 as illustrated in FIG. 4, and the distance from the side mirror 12 to the left-side end of the second range 62 (the lower end in FIG. 4) corresponds to the above-described second distance D2. The second range 62 has the length of a third distance D3 in the front-rear direction of the vehicle 1. The third distance D3 can be set to a length corresponding to the overall length of the vehicle **1,** for example, 3.5 to 4.5 m.

At least one of the first light blocking wall 40 and the second light blocking wall 50 may be disposed at a position that is not included in the imaging range 33 of the camera 30. Likewise, the infrared light emitter 20 may be installed at a position that is not included in the imaging range 33 of the camera 30. For example, in the arrangement illustrated in FIG. 3, the infrared light emitter 20, the first light blocking wall 40, and the second light blocking wall 50 are arranged at positions that are not included in the imaging range 33 of the camera 30.

When the infrared light emitter 20 and the camera 30 are housed in the housing 12b of the side mirror 12 mounted on the vehicle **1,** the camera 30 may be installed at a position that allows the camera 30 to image a front wheel and a rear wheel of the vehicle upon at least one of the unfolded state and folded state of the side mirror 12.

Furthermore, when the infrared light emitter 20 and the camera 30 are housed in the housing 12b of the side mirror 12 mounted on the vehicle 1, the camera 30 may be installed at a position that, upon at least one of the unfolded state and folded state of the side mirror 12, allows the camera 30 to image the vehicle body of the vehicle 1 (particularly the end portion of the side surface of the vehicle body or the front and rear ends of the vehicle bodies) and the horizon of ground 60 on which the vehicle 1 stands. The horizon refers to the boundary between the sky and the ground 60 on which the vehicle 1 stands in the image captured by the camera 30.

Although the infrared light emitter 20 and the camera 30 are housed in the housing 12b in the present embodiment, the infrared light emitter 20 and the camera 30 may be housed in the housing 12a.

### <Action of Vehicular Imaging Device>

When the infrared light is emitted to the light emission range 20z illustrated in FIG. 3, the infrared light reflected by the portion 11a appears in the image captured by the camera 30 because the portion 11a is included in the portion 11x, and there is a risk of a ghost occurring in the image. The portion of the image in which the ghost occurs turns white, making it impossible to detect a target object.

In contrast, in the vehicular imaging device 10 illustrated in FIG. 3, the light emission range of the infrared light emitter 20 is narrowed by the first light blocking wall 40 and the second light blocking wall 50, and the infrared light emitter 20 emits light to the light emission range 23 defined by the boundaries 21 and 22. Thus, by blocking a portion of the infrared light from the infrared light emitter 20 to narrow the light emission range, the infrared light is no longer emitted to the range corresponding to the area between the boundary 20x and the boundary 21. Accordingly, there is no portion of the side surface of the vehicle 1 included in the light emission range of the infrared light emitter 20, and it is possible to suppress the appearance in image of the infrared light reflected by the portion 11a.

Moreover, the infrared light emitter 20, the first light blocking wall 40, and the second light blocking wall 50 are arranged at positions that are not included in the imaging range 33 of the camera 30, and it is thereby possible to suppress the occurrence of vignetting due to the frames of these configurations appearing in the image captured by the camera 30. Since target objects cannot be imaged in the portion in which vignetting occurs, it becomes impossible to detect the target objects. By suppressing the occurrence of vignetting, it is possible to stably recognize the parking position regardless of the periphery environment of the vehicle 1.

Furthermore, the shapes and positions of the first light blocking wall 40 and second light blocking wall 50 are appropriately set, and it is thereby possible to emit the infrared light to the second range 62 and reliably recognize target objects present in the second range 62. This enables stable recognition of the parking position regardless of the environment around the vehicle 1.

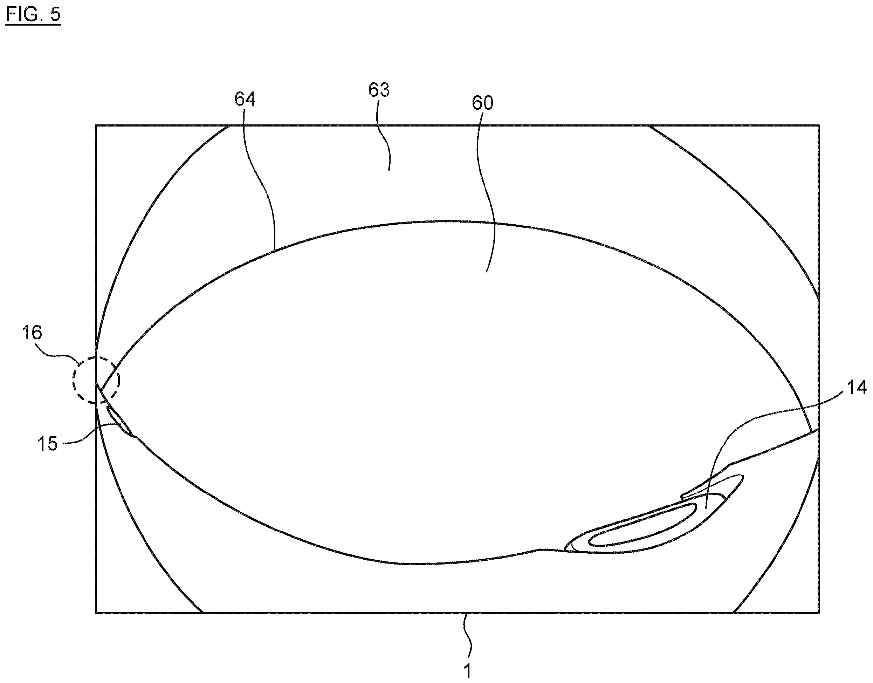

FIG. 5 is an example of the image captured by the camera 30 illustrated in FIG. 2A when the side mirror 12 illustrated in FIG. 1 is in an unfolded state. As illustrated in FIG. 5, the vehicular imaging device 10 of the present embodiment reliably images target objects around the vehicle 1 regardless of the environment around the vehicle 1. Specifically, it images a front wheel 14 and a rear wheel 15 of the vehicle 1. It also images an intersection 16 between the vehicle body of the vehicle 1 and a horizon 64 that is the boundary between sky 63 and the ground 60 on which the vehicle 1 stands.

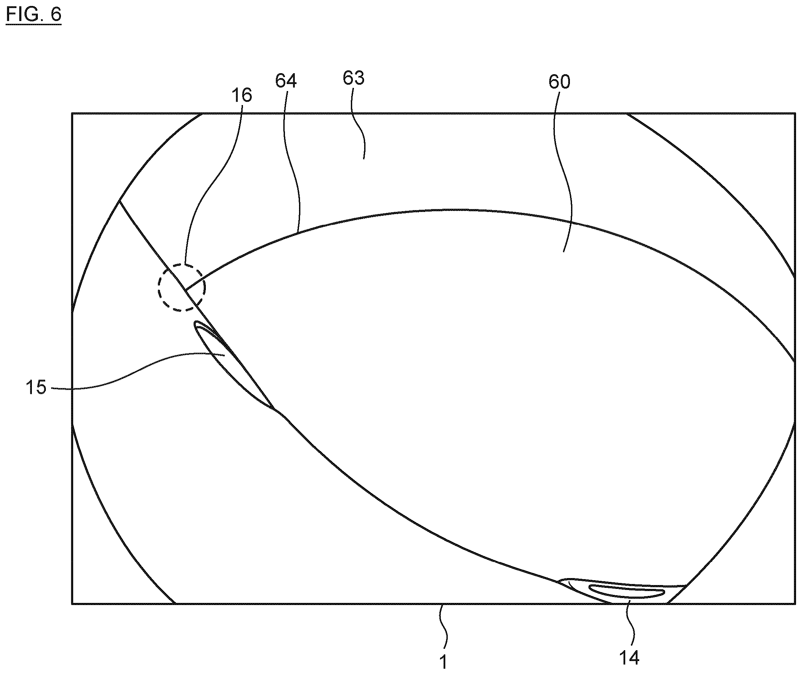

FIG. 6 is an example of the image captured by the camera 30 illustrated in FIG. 2A when the side mirror 12 illustrated in FIG. 1 is in a folded state. As with the image illustrated in FIG. 5, also in the image illustrated in FIG. 6, the front wheel 14 and rear wheel 15 of the vehicle 1 are imaged together with the intersection 16 between the vehicle body of the vehicle 1 and the horizon 64 that is the boundary between the sky 63 and the ground 60 on which the vehicle 1 stands.

When the sea appears in the image and the sea appearing and the sky 63 are in contact with each other, the horizontal line that is the boundary between the sky 63 and the sea may be used instead of the horizon 64. In other words, when the infrared light emitter 20 and the camera 30 are housed in the housing 12b of the side mirror 12 attached to the front door 11 of the vehicle 1, the camera 30 may be installed at a position that, upon at least one of the unfolded state and folded state of the side mirror 12, allows the camera 30 to image the vehicle body of the vehicle 1 appearing in the image and the horizontal line.

In the present embodiment, the vehicular imaging device is disposed on each of the right side and left side of the vehicle 1, but the vehicular imaging device may also be provided on each of the front side and rear side of the vehicle 1. For example, when the vehicular imaging device is attached to the upper portion of the windshield or rear window of the vehicle 1 and the camera 30 images the imaging range in front of or behind the vehicle 1, the vehicular imaging device can achieve the same actions and effects as those described above by disposing the first light blocking wall 40 to block a portion of the infrared light from the infrared light emitter 20.

### <Embodiments of Present Invention>

As described above, according to the present embodiment, a vehicular imaging device 10 is provided, comprising: an infrared light emitter 20 installed in an exterior component of a vehicle 1, the infrared light emitter 20 emitting infrared light to periphery of the vehicle 1; a camera 30 installed in the exterior component at a position spaced outward from the infrared light emitter 20 in a vehicle width direction of the vehicle **1,** the camera 30 capturing a target object to which the infrared light is emitted; and a first light blocking wall 40 disposed between the infrared light emitter 20 and the vehicle 1, the first light blocking wall 40 blocking a portion of the infrared light from the infrared light emitter 20. This makes it possible to suppress the occurrence of an area within the imaging range 33 of the camera 30 where the target object cannot be detected due to the appearance in image of those hindering the detection of the target object.

In addition, according to the vehicular imaging device 10 of the present embodiment, the exterior component is a side mirror 12 mounted on the vehicle **1,** the infrared light emitter 20 and the camera 30 are housed in a housing 12b of the side mirror 12, and the first light blocking wall 40 is a part of the housing 12b and, upon an unfolded state of the side mirror 12, blocks the infrared light emitted to a portion 11a of a side surface of the vehicle 1 that is included in the imaging range 33 of the camera 30. This can suppress the occurrence of a ghost due to the reflected light appearing in the image.

Moreover, according to the vehicular imaging device 10 of the present embodiment, the infrared light emitter 20 is installed at a position that is not included in the imaging range 33 of the camera 30. This can suppress the occurrence of vignetting due to the infrared light emitter 20 appearing in the image.

Furthermore, according to the vehicular imaging device 10 of the present embodiment, it includes a second light blocking wall 50 disposed between the infrared light emitter 20 and the camera 30, and the second light blocking wall 50 blocks a portion of the infrared light from the infrared light emitter 20 so that the infrared light from the infrared light emitter 20 is not emitted to the camera 30. This can suppress the occurrence of vignetting due to strong light (infrared light) appearing in the image.

In addition, according to the vehicular imaging device 10 of the present embodiment, the second light blocking wall 50 is disposed at a position that is not included in the imaging range of the camera 30. This can suppress the occurrence of vignetting due to the second light blocking wall 50 appearing in the image.

Moreover, according to the vehicular imaging device 10 of the present embodiment, the exterior component is a side mirror 12 mounted on the vehicle 1, the infrared light emitter 20 and the camera 30 are housed in a housing 12b of the side mirror 12, and the camera 30 is installed at a position that allows the camera 30 to image a front wheel 14 and a rear wheel 15 of the vehicle 1 upon an unfolded state of the side mirror 12. This allows the parking position of the vehicle 1 to be recognized more accurately.

Furthermore, according to the vehicular imaging device 10 of the present embodiment, the exterior component is a side mirror 12 mounted on the vehicle 1, the infrared light emitter 20 and the camera 30 are housed in a housing 12b of the side mirror 12, and the camera 30 is installed at a position that, upon an unfolded state of the side mirror 12, allows the camera 30 to image the vehicle 1 and a horizon 64 of a ground 60 on which the vehicle 1 stands. This allows the parking position of the vehicle 1 to be recognized more accurately.

In addition, according to the vehicular imaging device 10 of the present embodiment, the exterior component is a side mirror 12 mounted on the vehicle 1, the infrared light emitter 20 and the camera 30 are housed in a housing 12b of the side mirror 12, and the camera 30 is installed at a position that, upon a folded state of the side mirror 12, allows the camera 30 to image the vehicle 1 and a horizon 64 of a ground 60 on which the vehicle 1 stands. This allows the parking position of the vehicle 1 to be recognized more accurately.

Moreover, according to the vehicular imaging device 10 of the present embodiment, the first light blocking wall 40 is disposed at a position that is not included in the imaging range of the camera 30. This can suppress the occurrence of vignetting due to the first light blocking wall 40 appearing in the image.

Furthermore, according to the present embodiment, a side mirror 12 comprising the above-described vehicular imaging device 10 is provided. This makes it possible to suppress the occurrence of an area within the imaging range 33 of the camera 30 where the target object cannot be detected, particularly on a side of the vehicle 1.

### Description of Reference Numerals

1... Vehicle
10... Vehicular imaging device
11... Front door
11a... Portion included in imaging range
11x... Portion included in light emission range
12... Side mirror
12a, 12b... Housing
12c... Arm
12d... Base
13... Left-side lower end of vehicle body
14... Front wheel
15... Rear wheel
16... Intersection
20... Infrared light emitter
21, 21a, 22, 20x, 20y... Boundary
23, 20z... Light emission range
30... Camera
31, 32... Boundary
33... Imaging range
40... First light blocking wall
50... Second light blocking wall
60... Ground
61... First range
62... Second range
63... Sky
64... Horizon
D1... First distance
D2... Second distance
D3... Third distance

## Claims

1. A vehicular imaging device comprising:
an infrared light emitter installed in an exterior component of a vehicle, the infrared light emitter emitting infrared light to periphery of the vehicle;
a camera installed in the exterior component at a position spaced outward from the infrared light emitter in a vehicle width direction of the vehicle, the camera capturing an imaging range including a range into which the infrared light is emitted; and
a first light blocking wall disposed between the infrared light emitter and the vehicle, the first light blocking wall blocking a portion of the infrared light from the infrared light emitter.

2. The vehicular imaging device according to claim 1, wherein
the exterior component is a side mirror mounted on the vehicle,
the infrared light emitter and the camera are housed in a housing of the side mirror, and
the first light blocking wall is a part of the housing and, upon an unfolded state of the side mirror, blocks the infrared light emitted to a portion of a side surface of the vehicle that is included in the imaging range of the camera.

3. The vehicular imaging device according to claim 1 or 2, wherein the infrared light emitter is installed at a position that is not included in the imaging range of the camera.

4. The vehicular imaging device according to any one of claims 1 to 3, comprising
a second light blocking wall disposed between the infrared light emitter and the camera, the second light blocking wall blocking a portion of the infrared light from the infrared light emitter so that the infrared light from the infrared light emitter is not emitted to the camera.

5. The vehicular imaging device according to claim 4, wherein the second light blocking wall is disposed at a position that is not included in the imaging range of the camera.

6. The vehicular imaging device according to any one of claims 1 to 5, wherein
the exterior component is a side mirror mounted on the vehicle,
the infrared light emitter and the camera are housed in a housing of the side mirror, and
the camera is installed at a position that allows the camera to image a front wheel and a rear wheel of the vehicle upon an unfolded state of the side mirror.

7. The vehicular imaging device according to any one of claims 1 to 6, wherein
the exterior component is a side mirror mounted on the vehicle,
the infrared light emitter and the camera are housed in a housing of the side mirror, and
the camera is installed at a position that, upon an unfolded state of the side mirror, allows the camera to image the vehicle and a horizon of a ground on which the vehicle stands.

8. The vehicular imaging device according to any one of claims 1 to 7, wherein
the exterior component is a side mirror mounted on the vehicle,
the infrared light emitter and the camera are housed in a housing of the side mirror, and
the camera is installed at a position that, upon a folded state of the side mirror, allows the camera to image the vehicle and a horizon of a ground on which the vehicle stands.

9. The vehicular imaging device according to any one of claims 1 to 8, wherein the first light blocking wall is disposed at a position that is not included in the imaging range of the camera.

10. A side mirror comprising the vehicular imaging device according to any one of claims 1 to 9.
